# EUROPEAN PATENT APPLICATION

(11) **EP 1 650 116 A1**
(43) Date of publication of application: **26.04.2006**
(21) Application number: 04025163.9
(22) Date of filing: 22.10.2004
(51) Int. Cl.: B62D 55/265, B63B 59/10

(54) **Tracked type robot with magnetic soles**

(71) Applicant: SIN ANDAMIOS ALMANSA, SL, 02640 ALmansa (Albacete) (ES)
(72) Inventor: Garcia, Francisco Andrés Navalon, 02640 Almansa (Albacete) (ES)
(74) Representative: D'Agostini, Giovanni

(57) **Abstract**

Robot for treating and/or working of surfaces or external parts in large steel structures, said robot being of the tracked type for its movement,
characterised in that:
- there are magnetic soles (21) on the tracks (2) of said track-laying robot;
- said tracks (2) comprise two opposite, power-operated tracks with independent drive-motor means (3).

## Description

### Object

This invention relates to a robot for the treatment and/or working of external surfaces or parts in large steel structures according to the pre-characterizing part of the main claim.

### Technical Field

The technical field relates to very large and extended structures, such as for example the façades of buildings structured in steel, the keel of a ship, etc.

The types of treatment and working can be very different, such as for example:
- external maintenance, e.g. the cleaning of the surfaces;
- surface treating, e.g. abrasive brush or blasting and/or painting of the surfaces.

However, other treatments and works are not excluded, such as for example welding or the like, and therefore the aforementioned examples should not be considered as limitative. The vertical structures provided are very large, such as skyscrapers and similar buildings, or even overhanging structures such as the hull or keel of a ship. However, steel-structured vaulting surfaces such as stadiums, scatters etc. are not to be excluded, namely structures of the largest sizes. The definition of treatment and/or working of external surfaces or part is understood to mean any type of work attainable from outside the surface, intending outside not only to indicate the exterior of the structure but also the inside of the structure, the external part described herein always refers to the surface to be treated or to be worked.

### Background Art and Problems or Drawbacks of the State of the Art

In the present state of the art the treatment technique and/or working of external surfaces or parts in steel structures is well known for buildings such as skyscrapers which require the periodic cleaning of glazed fronts.

Nowadays, this operation is carried out using movable bridge means that are lifted and lowered and moved along the entire surface of the building with workers on board.

The need to work metallic surfaces for abrasive blasting or painting of structures is also known.

The periodic maintenance of the keel and hull of ships that must be almost annually sanded for the removal of marine scales and then revarnished etc. is also known. These operations also have to be carried out using complex and expensive means and that involve the additional cost of employing specialized workers.

Furthermore, workers suspended along the surfaces are always exposed to the danger of accidents and falling.

Furthermore, the maintenance of a building in a large vault is not easy for operators and is only possible with the use of scaffolding structures.

### Aim of the Present Invention

The aim of the present invention is to allow these operations to be carried out without personnel, without complex and expensive robotized structures and without the risk of accidents.

### Solution to the Problem and Disclosure of the Invention

The problem is solved with the characteristics of the main claim.

Namely with the use of a track-laying robot whose track-links are equipped with magnetic soles and wherein the driving means consist in two opposite and independent motor means, remote-controlling the two opposite tracks independently.

The sub-claims relate to preferred solutions.

### Advantages

In this way the robot can climb on any ferromagnetic steel surface that constitutes the swinging majority of steel structures.

The movement takes place without hangings and the robot is capable of moving vertically along the steel stanchions of a skyscraper, along the horizontal levels of said vertical surfaces of the steel structures, like a spider, both vertically along the iron beams of the columns and horizontally along the steel iron beams of the levels.

The latter is also true for interventions on the inside of structures or buildings. Further improved and without movement limitations it is capable of moving on the external surfaces of the hulls or keels of ships, both for maintenance in the shipyard as well as for urgent interventions at sea, with the capacity to function below sea level if the robot motor structure provided is completely water-tight. As conceived the robot can turn 360° without having to displace itself, moving only one or both tracks in the opposite direction. Consequently, it can move vertically and horizontally and also at right-angles along the stanchions or along the levels for façade cleaning and maintenance.

Moreover, it is also capable of carrying out extraordinary working processes in buildings, such as for example the electrowelding of a structure without the presence of workers.

It can also work together with other robots, for example, one for handling the object and another for welding.

Moreover, two robots can be connected to each other and advance simultaneously, for example, spaced apart and connected by a distanced linkage, e.g. a bridge for the cleaning of the glass façade of a steel-structured building in which a robot moves upwards on a stanchion and the adjacent robot moves upwards on another side in parallel direct on an adjacent stanchion.

### Description of a Preferred Embodiment

The invention will be better understood with the following description of a preferred example of robot and with the attached figures wherein:
Fig.1 represents the schematic overview of the robot, without cover structure for the view of the driving motor-means system;

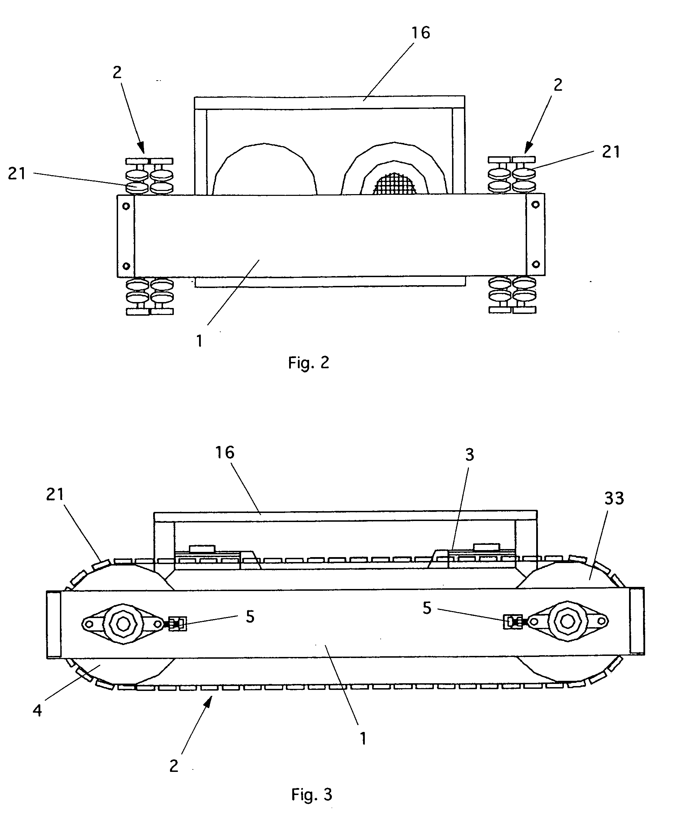

Fig.2 represents the front view and
Fig.3 represents the lateral view.

The remote-control electronic apparatus that can be any of known art has been intentionally omitted from all the figures as well as the treating or working apparatus e.g. power-operated brushes, cleaning means, articulated arms for surface workings e.g. cleaning, washing, spraying, painting, scaling etc., all means and devices which may be jointly or alternatively mounted on the said robot.

### Detailed Description of the Figures

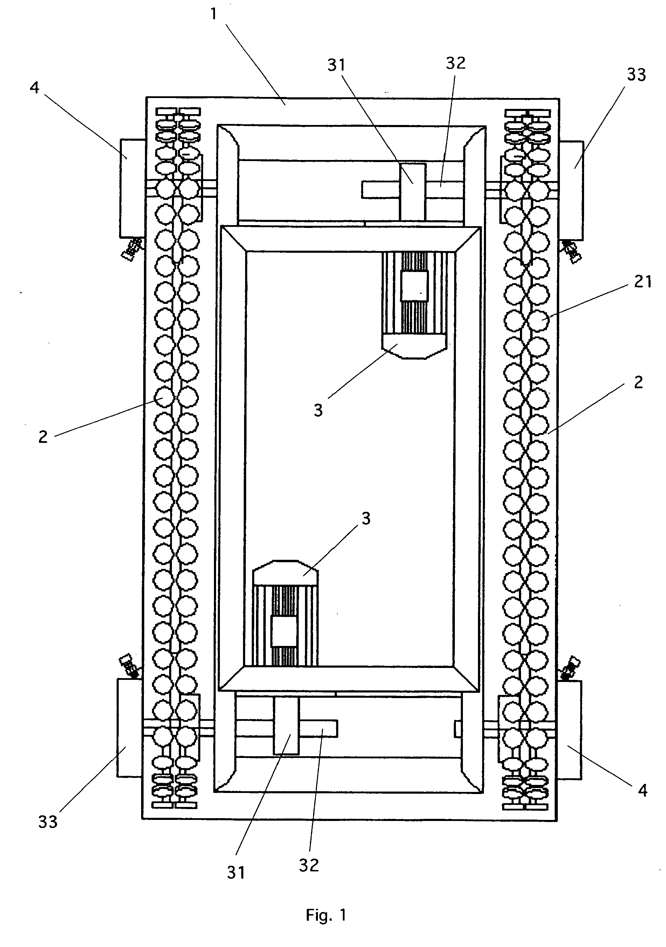

As per Figure 1 and as claimed the robot includes a quadrangular load-bearing frame structure (1) with wheel axles (4, 33) respectively front axles and rear axles that stretch respective tracks (2) as for a tank or as for a traditional tracked movement means, Eg. caterpillar.

These axles, or at least one of said axles is provided for side tension-track means (5).

The fundamental characteristic is that each track-link sole provides permanent magnets (21), advantageously there are two said magnets for each sole for improved security.

The driving means are two independently electro-controlled brushless electric motors, one for the track (3), with angular drive transmission connecting (31-32) to a respective crawler wheel-pinion (33).

The electric motors are diagonally-oppositely placed, in this way the system is perfectly balanced, namely baricentric that prevents any occurrence of overbalancing which could otherwise take place with other caterpillars of the known art.

In fact the opposite wheel to the motor wheel of the same axis is idle (4), both for front axles and for rear axles in opposite way (see Fig.1).

In this way, in addition to the baricentric arrangement, the robot can turn on itself, therefore moving in any direction.

Above the load-bearing frame of the tracked cart (1) an upper-frame (6) is provided to fix any suitable working means that can be also robotized and remote-controlled.

Advantageously, the permanent magnets (21) are made of neodymium magnetic material that ensures maximum efficiency, however they can also be made of other magnetic material such as the more or less pure loadstone.

The magnetic soles' surface can advantageously be covered with a thin layer of rubber based antiskid paint or other antiskid-material.

The track-sole magnetic surface finishing can also be different.

The magnets (21) take a circular form, thus ensuring the same anti-skid performance independently of the orientation of the robot on the vertical surface.

The robot can also be equipped with front and rear and/or lateral metal sensor means, in order to avoid the exit of the device from the running lines defined by the presence of the magnetic metal (ferromagnetic steel).

The electric motors can provide ratio-motor means in the transmission means (31-32) that are advantageously right-angled with respect to the driven wheel axle (32) for better housing, symmetrical arrangement and balancing.

The electric motors can be of step-type (brushless) and therefore with a continuous speed-changing means according to the remote control.

The electronic board is housed inside the frame (1-6) that is advantageously made from austenite stainless steel, namely non-magnetic steel.

In this way the frame structure will not interfere with the movement of the tracks. Encumbrance sensors such as those well known for the motor vehicles can be mounted on the robot to prevent the latter from colliding with stationary surfaces.

The process of climbing to a vertical surface occurs by means of the simple frontal approach of the robot to the metallic surface making it advance towards the surface.

In this way, the robot attaches itself by means of the magnets on the front links of tracks and by tilting it begins to climb.

For the detachment of the robot after the downtake, it is necessary to provide a tilted surface conveying iron placed on the ground that obliges the robot to move downwards detaching progressively from the vertical surface, until it is fully on the downtake tilted surface, and at the point when only four magnets are connected to the vertical part, they will detach with the sole advancing downwards.

The details can however vary without departing from the domain of the description and claims.

## Claims

1. Robot for treating and/or working of surfaces or external parts in large steel structures, said robot being of the tracked type for its movement,
**characterised in that**:
- there are magnetic soles (21) on the tracks (2) of said track-laying robot;
- said tracks (2) comprise two opposite, power-operated tracks with independent drive-motor means (3).

2. Robot according to claim 1, **characterised in that** said independent drive-motor means (3) are placed diagonally opposed on the plant side of the robot, so that the robot structure is substantially baricentrically-plant balanced.

3. Robot according to claim 1 and/or 2, **characterised in that** said independent drive-motor means (3) are placed diagonally opposed on the plant side of the robot, so that a front wheel (4) of a track (2) is idle and a front wheel (33) of the opposite track (2) is power-operated with said indipendent drive-motor means and in which correspondingly the same design for the rear wheels is applied but inversely.

4. Robot according to any of the previous claims, **characterised in that** said independent motor means (3) are placed according to a longitudinal axis and transmit the motion to the respective motor wheel with right-angled connecting means (31-32).

5. Robot according to any of the previous claims, **characterised in that** said magnetic soles (21) are provided in all the soles or links of the respective tracks (2).

6. Robot according to any of the previous claims, **characterised in that** it comprises cleaning means of the surfaces on which it moves.

7. Robot according to any of the previous claims, **characterised in that** it comprises treatment means of the surfaces on which it moves.

8. Robot according to any of the previous claims, **characterised in that** it comprises working means of the surfaces on which it moves.

9. Robot according to any of the previous claims, **characterised in that** the surface of said magnetic soles (21) are circular.

10. Robot according to any of the previous claims, **characterised in that** the surface of said magnetic soles (21) are covered with a thin-layer of anti-skid paint.

11. Robot according to any of the previous claims, **characterised in that** the magnets of said magnetic soles (21) are made of neodymium magnetic material.

12. Robot according to any of the previous claims, **characterised in that** the frame structure of said robot (1) is made from austenite stainless steel, namely non-magnetic.

13. Robot according to any of the previous claims, **characterised in that** it comprises a frame superstructure (6) for supporting treatment and/or working means and in which said superstructure (6) is made from austenite stainless-steel, namely non-magnetic steel.

14. Robot according to any of previous claims, **characterised in that** it comprises control means for the independent activation of said electric motors (3).

15. Robot according to any of the previous claims, **characterised in that** it comprises control means for the independent activation of said electric motors (3) that are remote-control means.

16. Robot according to any of the previous claims, **characterised in that** it comprises obstacle proximity sensor means for the control of its movement.

17. Robot according to any of the previous claims, **characterised in that** it comprises magnetic material sensor means in front and rearward of said tracks (2) for the control of its advancement, for guiding and for the eventual stop of the advancement.

18. Ensemble of track-robots aving two robots according to any of previous claims **characterised in** which the two robots are linked one to the other for a certain spaced-apart distance, in lorder to move in coordinate way and independently one the other and having between them said cleaning eand/or treatment and/or working means for the surface on which they move.
